# EUROPEAN PATENT APPLICATION

(11) **EP 4 810 552 A1**
(43) Date of publication of application: **23.09.2026**
(21) Application number: 25164263.3
(22) Date of filing: 17.03.2025
(51) Int. Cl.: C08K 3/34, C08K 5/098, C08L 23/16, C08F 210/16, C08F 4/649, C08F 4/654

(54) **PROPYLENE ETHYLENE COPOLYMER COMPOSITION**

(71) Applicant: Basell Poliolefine Italia S.r.l., 20121 Milano (IT)
(72) Inventor: CAVALIERI, Claudio, 44122 Ferrara (IT); BOCCHINO, Marco, 44122 Ferrara (IT); FIORAVANTI, Riccardo, 44122 Ferrara (IT); COVA, Cristina, 44122 Ferrara (IT); FERRARI, Paolo, 44122 Ferrara (IT)
(74) Representative: LyondellBasell

(57) **Abstract**

A propylene ethylene copolymer composition comprising:
T1) a propylene ethylene copolymer comprising
A) from 76.5 wt% to 96.0 wt% of a propylene homopolymer,
B) from 4.0 wt% to 23.5 wt% of a propylene ethylene

T2) from 0.05 wt% to 0.70 wt%; of a mixture of talc and sodium benzoate

## Description

### FIELD OF THE INVENTION

The present disclosure relates to a propylene ethylene copolymer composition comprising two nucleating agents. The propylene ethylene copolymer shows an improved stiffness and can be used for producing articles such as injection molded articles.

### BACKGROUND OF THE INVENTION

Polypropylene can be injection molded into a variety of desired articles. An advantage of using propylene ethylene copolymer composition is that it can be added to many kinds of polyolefins to achieve a final composition ready for production of articles such as automobile bumpers. The compositions usually exhibit a good balance of properties.

EP 3 722 634 relates to an impact copolymer propylene ethylene copolymer comprising: a propylene homopolymer or copolymer matrix and an ethylene propylene rubber phase dispersed in the matrix, wherein the ethylene propylene rubber phase (PER) is present in an amount of 5-15 %wt, based on the total weight of the propylene homopolymer or copolymer matrix and the ethylene propylene rubber phase, the amount of ethylene in the ethylene propylene rubber phase is 43-55 mol% (33-45 wt%), and the intrinsic viscosity of the ethylene propylene rubber (PER-IV) phase is 3-7 dL/g, and the impact copolymer propylene ethylene copolymer has a MFR2 of 70-200 g/10 min. The properties of these polymers can be improved in terms of impact properties.

It is well known in the art that nucleant agents increase the stiffness of the polypropylene material but at the same time the impact properties are lowered.

The applicant unexpectedly found that a particular mixture of two nucleants improves the stiffness of the material without worsening the impact properties that in some cases are improved.

Thus, the present disclosure provides a propylene ethylene copolymer composition comprising:
T1) A propylene ethylene copolymer having
   i) xylene soluble fraction at 25°C ranging from 5.8 wt% to 23.3 wt%; preferably from 6.8 wt% to 20.3 wt%; more preferably from 7.5 wt% to 18.8 wt%;
   ii) intrinsic viscosity of the fraction soluble in xylene at 25°C, measured in tetrahydronaphthalene at 135 °C, ranging from 2.0 to 5.3 dl/g dl/g; preferably from 2.3 to 5.0 dl/g; more preferably from 3.1 to 4.6 dl/g;
   iii) melt flow rate, MFR, measured according to ISO 1133-1:2012 at 230 °C with a load of 2.16 kg, ranging from 80 g/10 min to 190 g/10 min; preferably from 90 g/10 min to 180 g/10 min; more preferably from 100 g/10 min to 160 g/10 min;
   iv) an ethylene derived units content in the xylene soluble fraction at 25°C, measured by ¹³C-NMR ranging from 21.7 wt% to 45.5 wt% ; preferably from 25.0 wt% to 42.0 wt%; more preferably from 27.3 wt% to 39.5 wt%;
   the propylene ethylene copolymer comprises:
   A) from 76.5 wt% to 96.0 wt% preferably from 80.0 wt% to 95.0 wt% more preferably from of a 85.0 wt% to 94.0 wt% of a propylene homopolymer having the melt flow rate, MFR, measured according to ISO 1133-1:2012 at 230 °C with a load of 2.16 kg, ranging from 150 g/10 min to 320 g/10 min; preferably from 190 g/10 min to 300 g/10 min; more preferably from 200 g/10 min to 270 g/10 min; and
   B) from 4 wt% to 23.5 wt% preferably from 5.0 wt% to 20.0 wt% more preferably from of a 6.0 wt% to 15.0 wt% of a propylene ethylene copolymer, measured by ¹³C-NMR, having a content of ethylene derived units ranging from 37.0 wt% to 56.2 wt% preferably from 39.0 wt% to 54.2 wt%; more preferably from 43.5 wt% to 52.3 wt%;
   the sum of the amount of A) and B) being 100 wt%.
T2) from 0.10 wt% to 0.60 wt%; preferably from 0.15 wt% to 0.40 wt%; more preferably form 0.18 wt% to 0.32 wt%; of talc
T3) from 0.01 wt% to 0.1 wt%; preferably from 0.02 wt% to 0.70 wt% more preferably from 0.03 wt% to 0.05 wt%; of sodium benzoate wherein the sum of the amount wt% of T1) T2) and T3) being 100 wt%.

### DETAILED DESCRIPTION OF THE INVENTION

For the present disclosure, the term "copolymer" is referred to polymers containing only two kinds of comonomers, such as propylene and ethylene.

Preferably the propylene ethylene copolymer composition of the present disclosure is endowed with one or more of the properties: listed below.

Tensile modulus ranging from 1400 MPa to 2000 Mpa, preferably from 1450 MPa to 1900 MPa; more preferably from 1500 MPa to 1880 MPa.

Charpy impact at 23°C ranging from 1.2 KJ/m² to 8.2 KJ/m²; preferably from 2.2 KJ/m² to 7.2 KJ/m².

The synergistic effect of the mixture of talc and sodium benzoate (NaBz) increases the tensile and the flexural modulus of the composition with respect to the propylene ethylene copolymer without lowering the impact properties that are on the contrary slightly increased.

The propylene ethylene copolymer of the present disclosure is obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium. Preferably component B) is polymerized in a gas phase process in the presence of component A)

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The propylene ethylene copolymer herein disclosed is obtainable by a process comprising polymerizing propylene in the first stage (A) and copolymerizing propylene with ethylene in a second stage (B).

The process for preparing the propylene ethylene copolymer of the present disclosure is carried out in presence of a highly stereospecific heterogeneous Ziegler-Natta catalyst. The Ziegler-Natta catalysts suitable for producing the propylene ethylene copolymer of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Rₐ⁵g⁶Si(OR⁷)_{c} where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metil-dimethoxysilane. The external electron donor compound is used in such an amount to give a molar ratio between the organo-aluminum compound and said electron donor compound of from 0.1 to 500; preferably from 1 to 100; more preferably from 2 to 50.

The propylene ethylene copolymer composition of the present disclosure can be added with additives commonly known in the art.

Preferably talc has a particle size distribution comprised between 0.1 and 15 µm (micrometer) preferably between 0.3 and 10 µm.

The following examples are given to illustrate, not to limit, the present disclosure.

### EXAMPLES

### Xylene-soluble (XS) Fraction at 25 °C

Xylene Solubles at 25°C have been determined according to ISO 16 152.

### DSC method for melting point

Melting point has been measured according to ISO 11357-3, at scanning rate of 20C/min both in cooling and heating, on a sample of weight between 5 and 7 mg., under inert N2 flow. Instrument calibration made with indium.

### Melt Flow Rate (MFR)

Measured according to ISO 1133-1:2012 at 230 °C with a load of 2.16 kg, unless otherwise specified.

### Intrinsic Viscosity (IV)

Determined in tetrahydronaphthalene at 135 °C.

### Ethylene content in the copolymers

¹³C NMR spectra were acquired on a Bruker AV-600 spectrometer equipped with cryoprobe, operating at 160.91 MHz in the Fourier transform mode at 120°C.
The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with an 8 % wt/v concentration. Each spectrum was acquired with a 90° pulse, and 15 seconds of delay between pulses and CPD to remove ¹H-¹³C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

| | | |
|---|---|---|
| PPP = 100 Tββ/S | PPE = 100 Tβδ/S | EPE = 100 Tδδ/S |
| PEP = 100 Sββ/S | PEE= 100 Sβδ/S | EEE = 100 (0.25 Sγδ+0.5 Sδδ)/S |

$S = Tββ + Tβδ + Tδδ + Sββ + Sβδ + 0.25 Sγδ + 0.5 Sδδ$

The molar percentage of ethylene content was evaluated using the following equation: E% mol = 100 * [PEP+PEE+EEE]The weight percentage of ethylene content was evaluated using the following equation: $100 * E % mol * MWE$ $E % wt . = E % mol * MWE + P % mol * MWP$ where P% mol is the molar percentage of propylene content, while MWE and MWP are the molecular weights of ethylene and propylene, respectively.
**Preparation of injection molded specimens:** test specimens 80 x 10 x 4 mm were obtained according to the method ISO 1873-2:2007.
**Flexural modulus:** Determined according to the method ISO 178:2019 on injection molded test specimens.
**Tensile Modulus:** Determined according to ISO 527-2, on injection molded test specimens.
**Charpy Impact test :** measured according to ISO 179-1:2010 on injection molded specimens.

### Multi-Axial Instrumented Impact

Determined according to ISO 6603-2

### Copolymers preparation

### Preparation of the Ziegler-Natta solid catalyst component

The Ziegler-Natta catalyst was prepared according to Example 5, lines 48-55 of the European Patent EP728769B1.

### Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

### Prepolymerization

The catalyst system is then subject to prepolymerization treatment at 20°C by maintaining it in suspension in liquid propylene for a residence time of 8 minutes before introducing it into the polymerization reactor.

### Polymerization

### Polymerization

The polymerization run is conducted in continuous mode in a series of three reactors equipped with devices to transfer the product from one reactor to the one immediately next to it. The first two reactors are liquid phase reactors, and the third is a fluid bed gas phase reactor. Component (A) is prepared in the first and second reactor, the first and second reactor have the same polymerization parameters, while component (B) is prepared in the third.

Hydrogen is used as molecular weight regulator.

The gas phase (propylene, ethylene and hydrogen) is continuously analyzed via gas-chromatography.

At the end of the run the powder is discharged and dried under a nitrogen flow.

The main polymerization conditions are reported in Table1.

**Table 1**

| | | | **Cop. 1** | **Cop. 2** |
|---|---|---|---|---|
| TEAL/solid catalyst component weight ratio | | | 7.5 | 7.5 |
| TEAL/DCPMS weight ratio | | | 5 | 5 |

| **Liquid phase reactors** | | | | |
|---|---|---|---|---|
| | Polymerization temperature | °C | 75 | 75 |
| | Pressure | Bar-g | 41 | 41 |
| | Residence time | minutes | 78 | 74 |
| | H2 feed | ppm | 7300 | 6400 |
| C2/ (C2 + C3) | | Mol ratio | 0 | 0 |

| **1st gas phase reactor** | | | | |
|---|---|---|---|---|
| | Polymerization temperature | °C | 70 | 70 |
| | Pressure | Barg | 15 | 14 |
| | Residence time | min | 11 | 11 |
| | C2/ (C2 + C3) | Mol ratio | 0.37 | 0.45 |
| | H2 / C2 | Mol ratio | 0.09 | 0.07 |

C2=ethylene; C3=propylene; H2=hydrogen
the characterization of copolymers 1 and 2 is reported in Table 2.

**Table 2**

| Ex | | Cop 1 | Cop 2 |
|---|---|---|---|
| Component A | | | |
| Split | wt% | 90 | 92 |
| MFR | g/10 min | 250 | 210 |

| Component B | | | |
|---|---|---|---|
| Split | wt% | 10 | 8 |
| Ethylene content | wt% | 41.3 | 51.2 |

| Total composition | | | |
|---|---|---|---|
| MFR | g/10min | 130.0 | 120 |
| Ethylene content in the XS | Wt% | 33.1 | 36.4 |
| Xylene solubles fraction | Wt% | 10.9 | 8.9 |
| XSIV | dl/g | 3.4 | 3.3 |

Copolymers 1 and 2 have been blended with various mixtures of talc and sodium benzoate, Nabz, the characterization of the blends are reported on tables 3 and 4.

**Table 3**

| Copolymer 1 | | Ex 1 | Ex 2 | Ex 3 | Comp. Ex 4 |
|---|---|---|---|---|---|
| Talc | Wt% | 0.5 | 0.3 | 0.2 | 0.85 |
| NzBz | Wt% | 0.01 | 0.02 | 0.04 | 0 |
| Tensile modulus | MPa | 1560 | 1646 | 1640 | 1530 |
| Charpy Impact 23°C | KJ/m² | 3.7 | 3.8 | 4.3 | 3.6 |

Commercial talc HM05 having a particle size distribution sed between 0.5 and 5 micrometers has been used

**Table 4**

| Copolymer 2 | | Ex 1 | Ex 2 | Ex 3 | Comp. Ex 4 |
|---|---|---|---|---|---|
| Talc | Wt% | 0.5 | 0.3 | 0.2 | 0.85 |
| NzBz | Wt% | 0.01 | 0.02 | 0.04 | 0 |
| Tensile modulus | MPa | 1720 | 1780 | 1821 | 1700 |
| Charpy Impact 23°C | KJ/m² | 3.2 | 3.4 | 3.3 | 3.0 |

In tables 3 and 4 it is shown that by using the mixture of nucleants the tensile modulus is increased together with the impact property,

## Claims

1. A propylene ethylene copolymer composition comprising:
T1) a propylene ethylene copolymer having:
i) xylene soluble fraction at 25°C ranging from 5.8 wt% to 23.3 wt%;
ii) intrinsic viscosity of the fraction soluble in xylene at 25°C, measured in tetrahydronaphthalene at 135 °C, ranging from 2.0 to 5.3 dl/g dl/g;
iii) melt flow rate, MFR, measured according to ISO 1133-1:2012 at 230 °C with a load of 2.16 kg, ranging from 80 g/10 min to 190 g/10 min;
iv) an ethylene derived units content, in the xylene soluble fraction at 25°C, measured by ¹³C-NMR ranging from 21.7 wt% to 45.5 wt%;
the propylene ethylene copolymer comprises:
A) from 76.5 wt% to 96.0 wt% of a propylene homopolymer, having the melt flow rate, MFR, measured according to ISO 1133-1:2012 at 230 °C with a load of 2.16 kg, ranging from 150 g/10 min to 320 g/10 min; and
B) from 4.0 wt% to 23.5 wt% of a propylene ethylene copolymer having a content of ethylene derived units ranging from 41.0 wt% to 56.2 wt%;
the sum of the amount of A) and B) being 100 wt%;
T2) from 0.10 wt% to 0.60 wt% of talc;
T3) from 0.01 wt% to 0.1 wt% of sodium benzoate;
wherein the sum of the amount wt% of T1) T2) and T3) being 100 wt%.

2. The propylene ethylene copolymer composition according to claim 1 wherein in component T1) the xylene soluble fraction at 25°C ranges from 6.8 wt% to 20.3 wt%.

3. The propylene ethylene copolymer composition according to anyone of claims 1-2 wherein in component T1) the intrinsic viscosity of the fraction soluble in xylene at 25°C, measured in tetrahydronaphthalene at 135 °C, ranges from 2.3 to 5.0 dl/g.

4. The propylene ethylene copolymer composition according to anyone of claims 1-3 wherein in component T1) the melt flow rate, MFR, measured according to ISO 1133-1:2012 at 230 °C with a load of 2.16 kg, ranges from 90 g/10 min to 180 g/10 min.

5. The propylene ethylene copolymer composition according of claims 1-4 wherein in T1, component A) ranges from 80.0 wt% to 95.0 and component B) ranges from 5.0 wt% to 20.0 wt%.

6. The propylene ethylene copolymer composition according of claims 1-5 wherein in T1 in component B) the ethylene derived units content of a propylene ethylene copolymer ranges from 42.0 wt% to 54.2 wt%.

7. The propylene ethylene copolymer composition according to anyone of claims 1-6 wherein in T1 component A) has the melt flow rate, MFR, measured according to ISO 1133-1:2012 at 230 °C with a load of 2.16 kg, ranging from 190 g/10 min to 300 g/10 min.

8. The propylene ethylene copolymer composition according to anyone of claims 1-7 wherein component T2) talc ranges from form 0.15 wt% to 0.40 wt%.

9. The propylene ethylene copolymer composition according to anyone of claims 1-8 wherein component T2) talc ranges from 0.18 wt% to 0.32 wt%.

10. The propylene ethylene copolymer composition according to anyone of claims 1-9 wherein component T3) sodium benzoate ranges from 0.02 wt% to 0.70 wt%.

11. The propylene ethylene copolymer composition according to anyone of claims 1-10 wherein in component T1) component A) ranges from 85.0 wt% to 94.0 wt% and component B) ranges from 6.0 wt% to 15.0 wt%

12. The propylene ethylene copolymer composition according to anyone of claims 1-10 wherein in component T1) the xylene soluble fraction at 25°C ranges from 7.5 wt% to 18.8 wt%.

13. The propylene ethylene copolymer composition according to anyone of claims 1-12 wherein in component T1) the intrinsic viscosity of the fraction soluble in xylene at 25°C, measured in tetrahydronaphthalene at 135 °C, ranges from 2.8 to 4.6 dl/g.

14. The propylene ethylene copolymer composition according to anyone of claims 1-13 wherein in component T1) the melt flow rate, MFR, measured according to ISO 1133-1:2012 at 230 °C with a load of 2.16 kg, ranges from 100 g/10 min to 160 g/10 min.

15. An injection molding article comprising the propylene ethylene copolymer of claim 1-14.
